# EUROPÄISCHE PATENTSCHRIFT

(11) **EP 0 391 220 B1**
(45) Veröffentlichungstag und Bekanntmachung des Hinweises auf die Patenterteilung: **10.03.1993**
(21) Anmeldenummer: 90105861.0
(22) Anmeldetag: 28.03.1990
(51) Int. Cl.: A01C 15/18, A01C 7/06

(54) **Landwirtschafliche Verteilmaschine**
Agricultural distributor
Distributeur agricole

(30) Priorität: 06.04.1989 DE 3911156
(43) Veröffentlichungstag der Anmeldung: 10.10.1990
(73) Patentinhaber: Amazonen-Werke H. Dreyer GmbH & Co. KG, D-49202 Hasbergen (DE)
(72) Erfinder: Kemper, Martin, D-4506 Hagen am T.W. (DE); Volmer, Hubert, D-4506 Hagen am T.W. (DE); Lührmann, Johannes, D-4512 Wallenhorst (DE)

(56) Entgegenhaltungen:
- AU-B- 523 903
- FR-A- 2 015 668
- FR-A- 2 186 810
- FR-A- 2 298 925

## Beschreibung

Die Erfindung betrifft eine landwirtschaftliche Verteilmaschine gemäß des Oberbegriffes des Patentanspruches 1.

Eine derartige Verteilmaschine ist durch das deutsche Gebrauchsmuster 87 06 974 bekannt. Bei dieser Verteilmaschine wird der auszubringende Dünger den Dosierorganen zu den Düngersäscharen im Außenbereich mittels Förderschnecken oder -spiralen zugeleitet. Es hat sich nun jedoch gezeigt, daß beim verstopfen der Düngersäschare es zu Beschädigungen an den Förderschnecken oder -spiralen kommt.

Der Erfindung liegt die Aufgabe zugrunde, auf einfache und kostengünstige Weise sicherzustellen, daß beim verstopfen der Schare eine Beschädigung der Förderschnecken oder -spiralen vermieden und gleichzeitig eine Düngerablage sichergestellt wird.

Diese Aufgabe wird erfindungsgemäß durch die Maßnahme gemäß des Kennzeichens des Patentanspruches 1 gelöst. Infolge dieser Maßnahme kann das zu den Scharen von den Förderschnecken oder -spiralen geförderte Material über die Überlauföffnung an dem Schar vorbei nach außen gelangen, indem die federnde Klappe oder ähnliche Vorrichtungen, die vor der Überlauföffnung angeordnet sind, von dem von den Förderschnecken oder -spiralen geförderte Material nach außen gedrückt wird, wenn die Schare verstopft sind. Eine Beschädigung der Förderschnecken oder -spiralen wird in jedem Falle bei verstopfen der Säschare vermieden. Wenn die Verstopfung des Einlaufes der Schare beseitigt ist, wird die Überlauföffnung automatisch von der Klappe wieder geschlossen. Durch die Lage der Überlauföffnung neben dem Düngerschar ist sichergestellt, daß bei Verstopfung des Schares der Dünger über die Überlauföffnung neben dem Düngerschar auf dem Boden abgelegt wird.

Durch die FR-A- 20 15 668 ist eine landwirtschaftliche Verteilmaschine bekannt, deren Förderrohr durch eine federbelastete Klappe verschlossen ist. Wenn die im Förderrohr sich befindlichen Öffnungen verstopft sind, wird die federbelastete Klappe nach außen gedrückt. Die Klappe ist über einen Hebel mit einem Endschalter verbunden. Wenn die Klappe nach außen gedrückt wird, wird der Endschalter betätigt. Der Endschalter gibt seinen Impuls auf eine Elektromagnetkupplung, wodurch diese Kupplung gelüftet und somit der Antrieb der im Förderrohr angeordneten Förderschnecke unterbrochen wird.

In einer Weiterbildung der Erfindung ist vorgesehen, daß das Förderelement der Förderschnecke oder -spirale am Ende gelagert ist, daß die Klappe auf der Lagerwelle angeordnet ist und mittels einer auf der Lagerwelle angeordneten Druckfeder gegen das Ende des Förderrohres gedrückt wird. Hierdurch ergibt sich eine sehr einfache und kostengünstige Ausführung der erfindungsgemäßen Maschine. Durch die Lagerung des Förderelementes am Ende wird sichergestellt, daß die Förderspirale oder -schnecke sich nicht zusammendrücken kann. Außerdem ergibt sich eine einfache Anordnung der Überlauföffnung und der Anordnung der Klappe durch die Anordnung auf der Lagerwelle.

In vorteilhafter Weise weist das Förderrohr in Förderrichtung gesehen hinter dem Schareinlauf Überlauföffnungen auf.

Weitere Einzelheiten der Erfindung sind der Beispielsbeschreibung und den Zeichnungen zu entnehmen, Hierbei zeigt.

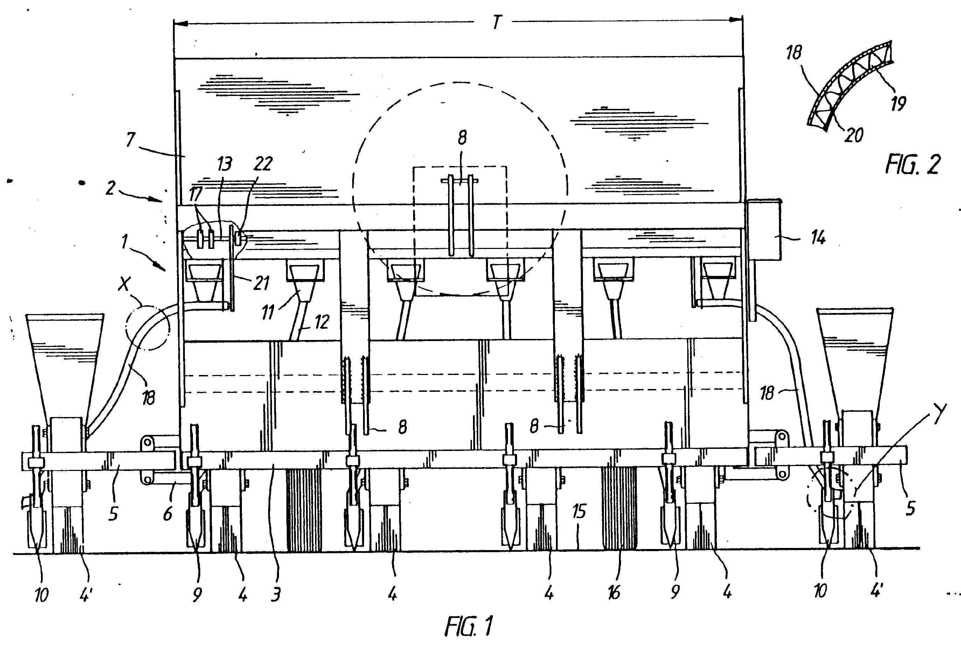

Fig. 1 eine erfindungsgemäß ausgebildete Verteilmaschine in der Ansicht von vorn und in der Prinzipdarstellung,
Fig. 2 die Einzelheit X, d.h. ein Stück Schlauchleitung mit Fördereinrichtung im Schnitt und in schematischer Darstellungsweise und
Fig. 3 die Anordnung der Überlauföffnungen am Ende der Fördereinrichtung gemäß Einzelheit Y in schematischer Darstellungsweise.

Die kombinierte landwirtschaftliche Verteilmaschine besteht aus der Einzelkornsämaschine 1 und dem Düngerstreuer 2. Die Einzelkornsämaschine 1 weist die an dem Tragrahmen 3 an dem die Einzelkornsägeräte 4 angeordnet sind, auf. Die äußeren Sägeräte 4′ sind an den schwenkbaren Teilen 5 des Tragrahmens 3 befestigt, welche über eine Schwenkvorrichtung 6 nach oben innerhalb des von dem Düngervorratsbehälter 7 begrenzten Bereichen in eine Transportstellung zur Reduzierung der Arbeitsbreite schwenkbar sind. An dem Tragrahmen 3 sind auf dessen Vorderseite die Dreipunktkupplungselemente 8 zum Anschluß der Verteilmaschine an den Dreipunktkraftheber eines Schleppers angeordnet. Der Düngervorratsbehälter 7 stützt sich an dem zentralen Rahmen 3 über zentrale Stützen ab. An dem Mittelteil des Tragrahmens 3 bzw. den Auslegern 5 sind die als Düngersäschare 9 bzw. 10 ausgebildeten Düngerablegevorrichtungen befestigt. Die Breite des Düngervorratsbehälters 7 bestimmt die Transportbreite T der Verteilmaschine.

Den innerhalb des von dem Düngervorratsbehälters 7 begrenzten Bereiches angeordneten Säschare 9 wird der Dünger aus dem Vorratsbehälter 7 über die zwischen den Düngersäscharen 9 und den Düngereinlauftrichtern 11 angeordneten Schlauchleitungen 12 mittels Schwerkraft zugeführt. An dem Vorratsbehälter 7 sind in dessen unteren Bereich Dosierorgane angeordnet, über welche der Dünger aus dem Vorratsbehälter 7 den Einlauftrichtern 11 zugeführt wird. Die Dosiervorrichtung weist eine Dosierwelle 13 auf, welche über ein einstellbares Getriebe 14 und einer nicht dargestellten Antriebsübertragung von den auf den Boden 15 abrollenden Laufrädern 16 angetrieben wird.

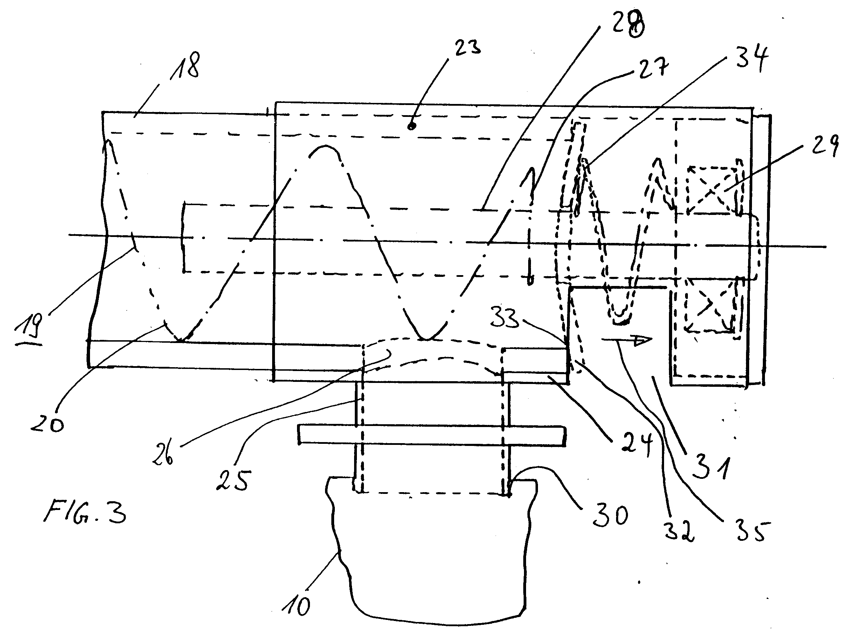

Zwischen den äußeren Säscharen 10, die an den Auslegern 5 außerhalb der Transportbreite T, die von der Breite des Düngerbehälters 7 bestimmt wird, angeordnet sind, und den Dosierorganen 17 ist die zu den Düngersäscharen 10 führende ununterbrochene Schlauchleitung 18 angeordnet. Innerhalb dieser Schlauchleitung 18 ist, wie Fig. 2 zeigt, die mechanische Fördereinrichtung 19 angeordnet. Diese mechanische Fördereinrichtung 19 ist als Förderschnecke bzw. Förderspirale 20 ausgebildet. Diese Förderspirale 20 wird über die Antriebsübertragung 21 von der Dosierwelle 13 angetrieben. Zwischen der Dosierwelle 13 und der Antriebsübertragungseinrichtung 21 ist das Kupplungselement 22 angeordnet. Über das Kupplungselement 22 ist der Antrieb zu der Fördereinrichtung 19 innerhalb der Schlauchleitung 18 abzuschalten. Diese Kupplung 22 wird dann betätigt, wenn der äußere Abschnitt 5 mit dem Einzelkornsägerät 4 und dem Düngersäschar 10 gegenüber dem Mittelteil der Verteilmaschine in Richtung der Maschinenmitte in eine Transportstellung versetzt wird. Somit wird der Antrieb für die in der Schlauchleitung 18 angeordneten Fördereinrichtung 19 bei sich in Transportstellung befindlicher Düngerablegeeinrichtung 10 automatisch abgeschaltet. Gleichzeitig wird die Düngerdosierung auch über die Kupplung 22 abgeschaltet, so daß die Düngerdosierorgane 17 stillgesetzt werden. Somit ist sichergestellt, daß bei sich in Transportstellung befindlichem Düngersäschar 10 kein Dünger mehr diesem Düngersäschar 10 zugeführt wird.

Am Ende 23 der Schlauchleitung 18 ist die Auslauftülle 24 angeordnet. Die Auslauftülle 24 weist oberhalb des Schares 10 den Auslaufstutzen 25 auf. Des weiteren ist im Bereich des Auslaufstutzen 25 in der Schlauchleitung 18 die Auslauföffnung 26 angeordnet, über welcher das von der Förderspirale 19 geförderte Material über den Stutzen 25 dem Säschar 10 zugeführt wird. Die Förderschnecke oder -spirale 20 ist an ihrem Ende 27 auf der Lagerwelle 28 befestigt. Die Lagerwelle 28 ist mittels des Lagers 29 am Ende des Auslaufstutzens 24 gelagert. Zwischen dem Auslaufstutzen 25 und dem Lager 29 befindet sich in Förderrichtung gesehen hinter dem Schareinlauf 30, in welchen der Stutzen 25 mündet, die Überlaufauslauföffnung 31. Am Ende der Schlauchleitung 18 befindet sich die durch die Klappe 32 verschlossene Überlauföffnung 33. Die Klappe 32 wird durch die Druckfeder 34 gegen das Schlauchende 18 gedrückt, so daß die Klappe 32 die Überlauföffnung 33 federnd verschließt. Die Druckfeder 34 befindet sich auf der Lagerwelle 28 und drückt die Klappe 32 gegen das Ende des Förderrohres, welches als Schlauchleitung 18 ausgebildet ist.

Wenn nun aus irgendeinem Grunde die Düngerzuführung in dem Säschar 10 verstopft, so füllt sich zunächst der Stutzen 25 mit dem von der Förderspirale 20 geförderten Material. Da das Material aufgrund der Verstopfung in dem Säschar 10 nicht mehr durch den Stutzen 25 abfließen kann, drückt die Spirale 20 das Material gegen die federnd angeordnete Klappe 32. Aufgrund des auftretenden Druckes wird die Klappe 32 gegen die Druckfeder 34 in Pfeilrichtung 35 aufgedrückt, so daß das von der Förderspirale 20 geförderte Material durch die Überlauföffnung 33 und die Düngerüberlaufauslauföffnung 31 neben dem Schar 10 herausfließen kann. Wenn die Verstopfung in dem Schar 10 beseitigt worden ist, schließt sich die Klappe 32 automatisch und verschließt wieder die Überlauföffnung 33.

## Patentansprüche

1. Landwirtschaftliche Verteilmaschine mit Vorratsbehälter (7) und Material in den Boden einbringenden Scharen (9), denen vom Vorratsbehälter aus das auszubringende Material über Förderschnecken oder -spiralen (19) zugeleitet wird, dadurch gekennzeichnet, daß im Bereich des Förderendes der Förderschnecke oder -spiralen (20) eine Überlauföffnung (33) vorgesehen ist, welche durch eine federnde Klappe (32) oder ähnlichem verschlossen ist, daß die Überlauföffnung (33) in Förderrichtung gesehen sich hinter dem Schareinlauf (30) befindet und zwar in einer derartigen Position, daß das aus der Überlauföffnung (33) herausfließende Material neben dem Schar (9) abgelegt wird.

2. Verteilmaschine nach Anspruch 1, dadurch gekennzeichnet, daß das Förderelement (20) der Förderschnecke oder -spirale (19) am Ende gelagert ist, daß die Klappe (32) auf der Lagerwelle (28) angeordnet ist und mittels einer auf der Lagerwelle (28) angeordneten Druckfeder (34) gegen das Ende des Förderrohres gedrückt wird.

## Claims

1. Agricultural distributing machine, including a hopper (7) and coulters (9), which introduce material into the ground and to which the material to be discharged is supplied from the hopper via the intermediary of screw or spiral conveyors (19), characterised in that an overflow aperture (33) is provided in the region of the conveying end of the screw or spiral conveyors (20) and is sealed by a resilient flap (32) or by similar means, in that the overflow aperture (33) is situated behind the coulter inlet (30), when viewed with respect to the conveying direction, in such a position that the material flowing from the overflow aperture (33) is deposited adjacent the coulter (9).

2. Distributing machine according to claim 1, characterised in that the conveying member (20) of the screw or spiral conveyor (19) is supported at the end, in that the flap (32) is disposed on the bearing shaft (28) and is urged towards the end of the conveying tube by means of a compression spring (34), which is disposed on the bearing shaft (28).

## Revendications

1. Distributeur agricole comportant un réservoir d'alimentation (7) et des socs (9) destinés à introduire le produit dans le sol, des vis ou spirales de transfert (19) fournissant le produit à distribuer aux socs à partir du réservoir d'alimentation, distributeur caractérisé en ce qu'au niveau de l'extrémité de transfert de la vis ou de la spirale de transfert (20), il est prévu un orifice de débordement (33) fermé par un volet élastique (32) ou moyen analogue et l'orifice de débordement (33) se trouve en aval de l'entrée de soc (30) vu dans le sens du transfert et dans une position telle que le produit qui sort de l'orifice de débordement (33) passe à côté du soc (10).

2. Distributeur selon la revendication 1, caractérisé en ce que l'élément de transfert (20) est prévu à l'extrémité de la vis ou de la spirale de transfert (19), le volet (32) étant monté sur un axe de palier (28) et un ressort (34) lui-même monté sur l'axe de palier (28) pousse le volet contre l'extrémité du tube de transfert.
